# EUROPÄISCHE PATENTANMELDUNG

(11) **EP 3 800 722 A1**
(43) Veröffentlichungstag der Anmeldung: **07.04.2021**
(21) Anmeldenummer: 19200696.3
(22) Anmeldetag: 01.10.2019
(51) Int. Cl.: H01M 10/42, H01M 10/44, H01M 10/48, H02J 7/00

(54) **VERFAHREN ZUM EFFIZIENTEN ENTLADEN EINES AKKUMULATORS**

(71) Anmelder: Hilti Aktiengesellschaft, 9494 Schaan (LI)
(72) Erfinder: Mayer, Stefan, 85221 Dachau (DE); Hauser, Klaus, 86830 Schwabmünchen (DE); Koscheck, David, 86163 Augsburg (DE)
(74) Vertreter: Hilti Aktiengesellschaft Corporate Intellectual Property

(57) **Zusammenfassung**

Verfahren zum Steuern und Regeln einer Werkzeugmaschine mit wenigstens einem Akkumulator, einem Antrieb sowie wenigstens einer Steuerungseinrichtung, wobei der Akkumulator als Energieversorgung für die Werkzeugmaschine dient. Das Verfahren enthält die Verfahrensschritte: Erfassen wenigstens eines Temperaturwertes des Akkumulators durch eine Temperaturmesseinrichtung; Erfassen wenigstens eines ersten Spannungswertes des Akkumulators durch eine Spannungsmesseinrichtung; und Einstellen eines ersten Leistungsparameterwertes der Werkzeugmaschine auf einen zweiten Leistungsparameterwert der Werkzeugmaschine zum Einstellen eines Stromstärkenwerts, wenn der erfasste Temperaturwert einem vorbestimmten Temperaturschwellwert und der erfasste Spannungswert einem vorbestimmten Spannungsschwellwert entspricht.

System enthaltend eine Werkzeugmaschine und wenigstens einen Akkumulator zur Versorgung der Werkzeugmaschine mit elektrischer Energie zur Durchführung des Verfahrens.

## Beschreibung

Die vorliegende Erfindung betrifft eine Verfahren zum Steuern und Regeln einer Werkzeugmaschine mit wenigstens einem Akkumulator, einem Antrieb sowie wenigstens einer Steuerungseinrichtung, wobei der Akkumulator als Energieversorgung für die Werkzeugmaschine dient.

Darüber hinaus betrifft die vorliegende Erfindung ein System enthaltend eine Werkzeugmaschine und wenigstens einen Akkumulator zur Versorgung der Werkzeugmaschine mit elektrischer Energie zur Durchführung des erfindungsgemäßen Verfahrens.

Moderne Werkzeugmaschinen, wie beispielsweise Bohrhämmer, Sägen, Schleifgeräte oder dergleichen, verfügen
Bei der Verwendung eines Akkumulators als Energieversorgung einer Werkzeugmaschine besteht das Problem, dass der Akkumulator bei der Abgabe der elektrischen Energie durch den Innenwiderstand (auch als Ausgangswiderstand bezeichnet) der Akku-Zellen aufgeheizt wird. Aus Sicherheitsgründen wird die Abgabe der elektrischen Energie aus dem Akkumulator beendet, wenn die Akku-Zellen einen kritischen Temperaturschwellwert erreichen oder übersteigen. Nachteilig hieran ist, dass zu dem Zeitpunkt des Erreichens des Temperaturschwellwerts der Akkumulator oftmals noch nicht vollständig entladen bzw. noch Kapazität (elektrische Spannung) in den Akku-Zellen vorhanden ist, die jedoch nunmehr dem Anwender der Werkzeugmaschine nicht mehr zur Verfügung steht. Mit anderen Worten: wegen des frühzeitigen Überhitzens der Akku-Zellen kann nicht die gesamte Kapazität des Akkumulators nicht genutzt werden.

Aufgabe der vorliegenden Erfindung ist es daher, ein Verfahren zum Steuern und Regeln einer Werkzeugmaschine mit wenigstens einem Akkumulator bereitzustellen, mit dem das vorstehend genannte Problem gelöst und eine möglichst effektive Nutzung der verfügbaren Kapazität eines Akkumulators als Energieversorgung für eine Werkzeugmaschine vor einem Überhitzen der Akku-Zellen gewährleistet werden kann.

Die Aufgabe wird gelöst durch den Gegenstand des unabhängigen Anspruchs 1 und 4. Weitere vorteilhafte Ausgestaltungsformen der Erfindung finden sich in den entsprechenden Unteransprüchen.

Die Aufgabe wird insbesondere gelöst durch ein Verfahren zum Steuern und Regeln einer Werkzeugmaschine mit wenigstens einem Akkumulator, einem Antrieb sowie wenigstens einer Steuerungseinrichtung, wobei der Akkumulator als Energieversorgung für die Werkzeugmaschine dient.

Erfindungsgemäß enthält das Verfahren die Verfahrensschritte
- Erfassen wenigstens eines Temperaturwertes des Akkumulators durch eine Temperaturmesseinrichtung;
- Erfassen wenigstens eines ersten Spannungswertes des Akkumulators durch eine Spannungsmesseinrichtung; und
- Einstellen eines ersten Leistungsparameterwertes der Werkzeugmaschine auf einen zweiten Leistungsparameterwert der Werkzeugmaschine zum Einstellen eines Stromstärkenwerts, wenn der erfasste Temperaturwert einem vorbestimmten Temperaturschwellwert und der erfasste Spannungswert einem vorbestimmten Spannungsschwellwert entspricht.

Entsprechend einer vorteilhaften Ausführungsform der vorliegenden Erfindung kann es möglich sein, dass das Verfahren die Verfahrensschritte enthält
- Speichern des eingestellten Stromstärkenwertes in einer Speichereinrichtung des Akkumulators;
- Senden des Stromstärkenwertes von der Speichereinrichtung des Akkumulators an die Steuerungseinrichtung der Werkzeugmaschine; und
- Einstellen des Stromstärkenwertes durch Einstellen wenigstens eines Leistungsparameterwertes der Werkzeugmaschine, wenn der Akkumulator einen vorbestimmten Ladungswert übersteigt.

Gemäß einer vorteilhaften Ausführungsform der vorliegenden Erfindung kann es möglich sein, dass der Leistungsparameter der Werkzeugmaschine ein Drehzahlwert des Antriebs oder ein Drehmomentwert des Antriebs ist.

Des Weiteren wird die Aufgabe gelöst durch System enthaltend eine Werkzeugmaschine und wenigstens einen Akkumulator zur Versorgung der Werkzeugmaschine mit elektrischer Energie zur Durchführung des Verfahrens.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: einen Querschnitt durch ein erfindungsgemäßes System enthaltend eine Werkzeugmaschine mit einem angeschlossenen Akkumulator; und
- Fig. 2: eine grafische Darstellung des Spanungsfalls, des Temperaturanstiegs und des Verlaufs der Stromstärke während der Verwendung eines Akkumulators zur Versorgung einer Werkzeugmaschine mit elektrischer Energie.

### Ausführungsbeispiele:

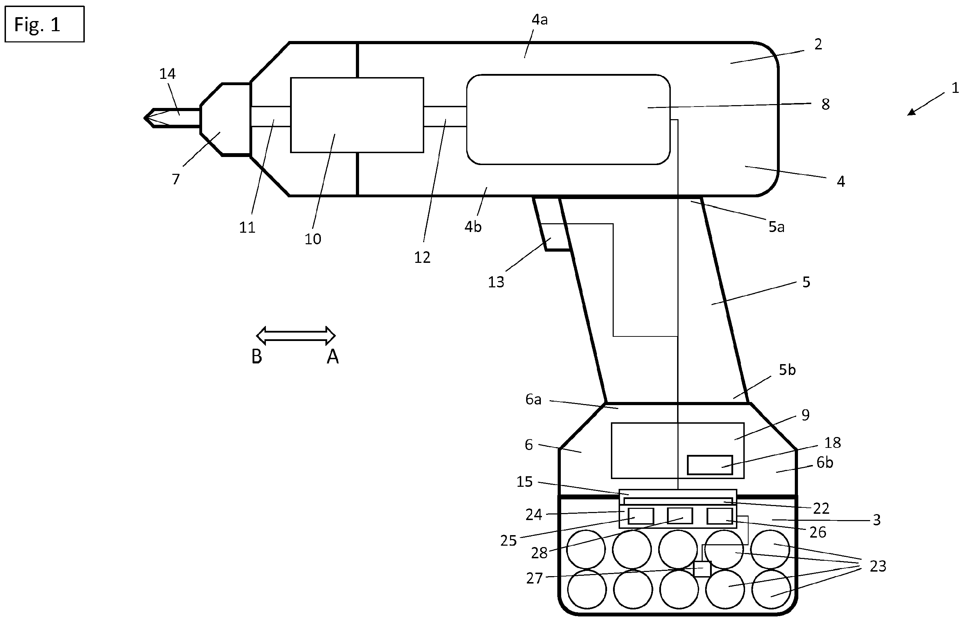

In Figur 1 ist ein erfindungsgemäßes System 1 mit einer Werkzeugmaschine 2 und einem Akkumulator 3 dargestellt. Der Akkumulator 3 ist mit der Werkzeugmaschine verbunden und dient zur Versorgung der elektrischen Verbraucher der Werkzeugmaschine 2 mit elektrischer Energie. Bei der Versorgung fließt elektrischer Strom von dem Akkumulator 3 zu der Werkzeugmaschine 2.

Gemäß einer alternativen Ausgestaltungsform der vorliegenden Erfindung kann die Versorgung der Werkzeugmaschine 2 mit elektrischer Energie nicht durch wenigstens einen Akkumulator, sondern durch einen Netzwerkanschluss erfolgen. Den Netzwerkanschluss kann man auch als Stromkabel bezeichnen. Diese alternative Ausgestaltungsform der vorliegenden Erfindung ist in den Figuren nicht gezeigt.

Wie in Figur 1 dargestellt, ist die Werkzeugmaschine 2 in Form eines Akku-Schraubers dargestellt. Gemäß anderer alternativer Ausführungsformen kann die Werkzeugmaschine 2 auch in Form einer Bohrmaschine, einer Säge, eines Schleifgeräts oder dergleichen ausgestaltet sein.

Die als Akku-Schrauber ausgestaltete Werkzeugmaschine 2 enthält im Wesentlichen ein Gehäuse 4, ein Handgriff 5, ein Fussteil 6, eine Werkzeugaufnahme 7, einen elektrischen Antrieb 8 in Form eines Elektromotors, eine Steuerungseinrichtung 9, ein Getriebe 9a, eine Antriebswelle 11, eine Abtriebswelle 12 und einen Aktivierungsschalter 13.
Der als Elektromotor ausgestaltet elektrische Antrieb 8, das Getriebe 10, die Antriebswelle 11, die Abtriebswelle 12 und die Steuerungseinrichtung 9 sind in dem Gehäuse 4 positioniert. Der Antrieb 8, das Getriebe 10, die Antriebswelle 11 und die Abtriebswelle 12 sind so zueinander und in dem Gehäuse 10 positioniert, dass ein von dem Antrieb 8 erzeugtes Drehmoment an die Abtriebswelle 12 übertragen wird. Die Abtriebswelle 12 überträgt das Drehmoment auf das Getriebe 10, welches wiederum ein Drehmoment an die Antriebswelle 11 weitergibt. Über die Antriebswelle 11 wird durch Übertragung des Drehmoments die Werkzeugaufnahme 7 angetrieben. Wie in Figur 1 dargestellt, ist in der Werkzeugaufnahme 7 ein Werkzeug 14 in Form eines Bits gehalten. Mit Hilfe des Bits kann eine Schraube in einen Werkstoff eingeschraubt werden. Weder die Schraube noch der Werkstoff sind in den Figuren dargestellt.

Wie weiterhin in Figur 1 gezeigt, enthält das Gehäuse 4 eine Oberseite 4a und eine Unterseite 4b. Der Handgriff 5 enthält ein erstes Ende 5a und ein zweites Ende 5b. An der Unterseite 4b des Gehäuses 4 ist das erste Ende 5a des Handgriffs 5 befestigt. Des Weiteren enthält das Fussteil 6 ein oberes Ende 6a und ein unteres Ende 6b. Das obere Ende 6a des Fussteils 6 ist an dem zweiten Ende 5b des Handgriffs 5 befestigt. Das untere Ende 6b des Fussteils 6 enthält eine mechanische, elektrische und elektronische Schnittstelle 15 und dient zum mechanischen, elektrischen und elektronischen Verbinden mit dem Akkumulator 3. Zur Aufnahme von elektrischen Strom enthält die Schnittstelle 15 eine Anzahl an Stromanschlüssen. Die Schnittstelle 15 enthält darüber hinaus Datenanschlüsse zum Senden und Empfangen von Signalen zwischen der Werkzeugmaschine 2 und dem Akkumulator 3.

Wie Figuren 1 weiterhin zu entnehmen ist, ist die Steuerungseinrichtung 9 der Werkzeugmaschine 2 in dem Fussteil 6 der Werkzeugmaschine 2 positioniert. Die Steuerungseinrichtung 9 der Werkzeugmaschine 2 dient zum Steuern und Regeln verschiedener Vorgänge in Bezug auf die Werkzeugmaschine 2 sowie in Bezug auf den Akkumulator 3. Die Steuerungseinrichtung 9 steuert insbesondere den Strom bzw. die Stromstärke, die von dem Akkumulator 3 zu der Werkzeugmaschine 2 und insbesondere zum Antreiben des als Elektromotor ausgebildeten Antriebs 8 fließt.

Die Steuerungseinrichtung 9 der Werkzeugmaschine 2 enthält dabei einen Mikrocontroller 18 (auch als MCU bezeichnet) sowie eine Datenschnittstelle mit einem ersten Transceiver als Bestandteil eines Kommunikationsschaltkreises für eine Kommunikation (d.h. Daten- und Signalaustausch) zwischen dem Akkumulator 3 und der Werkzeugmaschine 2.

Der Akkumulator 3 enthält im Wesentlichen ein Gehäuse 21 mit einer Akku-Schnittstelle 22, eine Vielzahl an Energiespeicherzellen 23, eine Steuerungselektronik 24 sowie eine Temperaturmesseinrichtung 27. Die Steuerungselektronik 24 enthält wiederum einen Mikrocontroller 25, eine Spannungsmesseinrichtung 26 und eine Speichereinrichtung 28.
Die Temperaturmesseinrichtung 27 kann auch als Temperatursensor bezeichnet werden.
Der Akkumulator 3 enthält des Weiteren eine Datenschnittstelle mit einem zweiten Transceiver als Bestandteil eines Kommunikationsschaltkreises für die Kommunikation zwischen dem Akkumulator 3 und der Werkzeugmaschine 2.
Die Energiespeicherzellen 23 können auch als Akku-Zellen bezeichnet werden und dienen zum Aufnehmen, Speichern und Bereitstellen einer elektrischen Energie bzw. einer elektrischen Spannung.
Die Akku-Schnittstelle 22 ist an einer Seite des Gehäuses 21 positioniert. Die Akku-Schnittstelle 22 enthält eine Anzahl an Stromsteckern zum Aufnehmen und Abgeben von elektrischem Strom sowie Datensteckern zum Senden und Empfangen von Signalen zwischen der Werkzeugmaschine 2 und dem Akkumulator 3. Über die Stromstecker kann der elektrische Strom von den Energiespeicherzellen 23 abgegeben werden.

Wie in Figur 1 gezeigt ist die Werkzeugmaschine 2 mit dem Akkumulator 3 verbunden, sodass auch die Stromstecker des Akkumulators 3 mit den Stromanschlüssen der Werkzeugmaschine 2 verbunden sind. Ebenso sind die Datenstecker des Akkumulators 3 mit den Datenanschlüssen der Werkzeugmaschine 2 verbunden.
Durch die Verbindung kann elektrischer Strom von den Energiespeicherzellen 23 des Akkumulators 3 zu der Werkzeugmaschine 2 fließen. Des Weiteren können Signale zur Kommunikation zwischen dem Akkumulator 3 und der Werkzeugmaschine 2 ausgetauscht werden.

Wie der Figur 1 zu entnehmen ist, ist der Aktivierungsschalter 13 an einer 5c Vorderseite des Handgriffs 5 positioniert. Durch ein Bewegen des Aktivierungsschalters 13 in Richtung A kann ein Signal von dem Aktivierungsschalter 13 an die Steuerung 9 gesendet werden, wodurch die Steuerung 9 wiederum ein Signal an die Steuerungselektronik 24 des Akkumulators 3 sendet. Durch das an die Steuerungselektronik 24 gesendete Signal wird elektrische Energie bzw. elektrischer Strom mit einem bestimmten Stromwert von dem Akkumulator 3 für den elektrischen Verbraucher der Werkzeugmaschine 2 und insbesondere den als Elektromotor ausgebildeten Antrieb 8 freigegeben. Die Werkzeugmaschine 2 hat eine (nicht gezeigte) Stromeinrichtung, mit der die Stromstärke des Versorgungstroms gemessen werden kann. Wenn ein Versorgungsstrom mit einer zulässigen Stromstärke gemessen wird, kann der Versorgungsstrom zu den elektrischen Verbrauchern der Werkzeugmaschine 2 fliessen. Alternativ oder zusätzlich kann die Strommesseinrichtung auch in dem Akkumulator 3 positioniert sein.

Um ein Signal entsprechend der Wegstrecke des Aktivierungsschalters 13 in Richtung A an die Steuerung 9 zu senden, enthält der Aktivierungsschalter 13 ein nicht gezeigtes Potentiometer, auch Poti genannt.

Wenn sich der Aktivierungsschalter 13 wieder in Richtung B bewegt, wird ein entsprechendes Signal mit Hilfe des (nicht gezeigten) Potentiometers an die Steuerung 9 gesendet, sodass kein elektrischer Strom mehr vom Akkumulator 3 zu der Werkzeugmaschine 2 fließt.

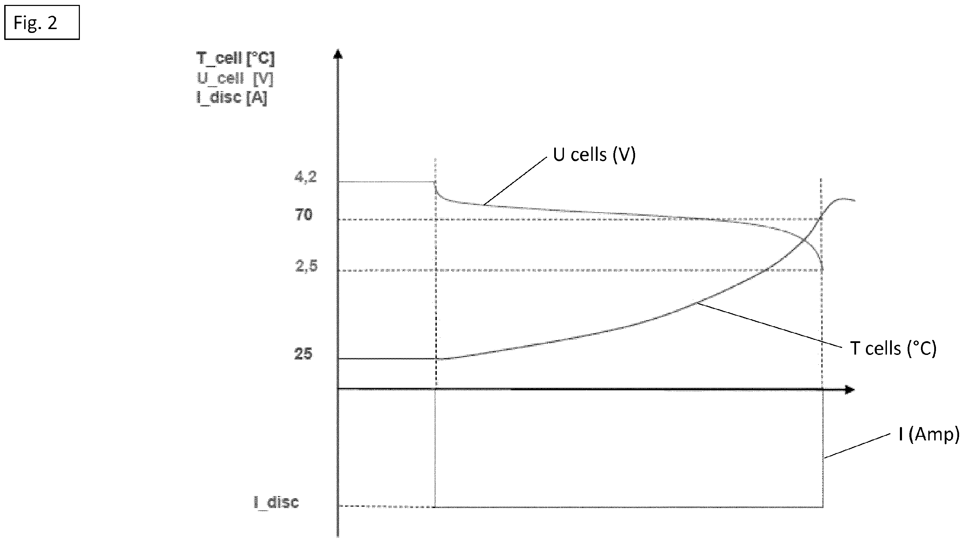

Bei der Abgabe von elektrischer Energie erhitzen sich die Energiespeicherzellen 23. Der Temperaturverlauf der Akku-Zellen (siehe Figur 2) wird mittels der Temperaturmesseinrichtung 27 erfasst. Während der Abgabe von elektrischer Energie vom Akkumulator an die Werkzeugmaschine liegt die Temperatur der Akku-Zellen für gewöhnlich zwischen 25°C und 70°C. Die Spannung an jeder Akku-Zelle wird mittels der Spannungsmesseinrichtung 26 erfasst. In einem geladenen Zustand beträgt die Spannung einer Akku-Zelle 4,2 Volt und in einem entladenen Zustand 2,5 Volt.

In dem Fall, dass die Temperatur der Akku-Zellen über 70°C steigt und die Spannung einer Akku-Zelle unter 2,5 Volt fällt, wird durch die Steuerungselektronik 24 des Akkumulators 3 die Abgabe von elektrischer Energie an die Werkzeugmaschine 2 gestoppt.

Um zu verhindern, dass ein zu frühes Erreichen eines kritischen Temperaturschwellwerts der Akku-Zellen 23 die Abgabe an elektrischen Energie von dem Akkumulator an die Werkzeugmaschine beendet wird, wird die Leistung der Werkzeugmaschine entsprechend reduziert. Hierzu wird mit Hilfe der Steuerungseinrichtung 9 die Drehzahl des Antriebs 8 verringert. Durch die Verringerung der Drehzahl des Antriebs 9 wird der Wert der Stromstärke, der von den Akku-Zellen 23 zum Antrieb 8 der Werkzeugmaschine fließt, reduziert. Durch die geringere Stromstärke verlangsamt sich der Temperaturanstieg an den Akku-Zellen, sodass für einen längeren Zeitraum elektrische Spannung (d.h. elektrische Energie) aus den Akku-Zellen entnommen werden kann.

Des Weiteren wird der Wert der Stromstärke. mit dem ein möglichst langsamer Temperaturanstieg in den Akku-Zellen 23 erreicht wird, in der Speichereinrichtung 28 des Akkumulators 3 gespeichert. Wenn der Akkumulator 3 für eine erneute Verwendung als Energieversorgung einer Werkzeugmaschine 2 vollständig geladen ist, wird der Wert der Stromstärke. mit dem ein möglichst langsamer Temperaturanstieg in den Akku-Zellen 23 erreicht wird, an die Steuerungseinrichtung 9 der Werkzeugmaschine 2 gesendet. Mit Hilfe dieses ermittelten Stromstärkenwert kann gleich zu Beginn der Verwendung des geladenen Akkumulators 3 die Leistungsabgabe des Antriebs 8 so eingestellt bzw. gewählt werden, dass ein zu schneller Temperaturanstieg an den Akku-Zellen 23 verhindert und eine nahezu vollständige Entladung der Akkuzellen 23 erreicht wird.

## Patentansprüche

1. Verfahren zum Steuern und Regeln einer Werkzeugmaschine (2) mit wenigstens einem Akkumulator (3), einem Antrieb (8) sowie wenigstens einer Steuerungseinrichtung (9), wobei der Akkumulator (3) als Energieversorgung für die Werkzeugmaschine (2) dient,
**gekennzeichnet durch** die Verfahrensschritte
- Erfassen wenigstens eines Temperaturwertes des Akkumulators (3) durch eine Temperaturmesseinrichtung (27);
- Erfassen wenigstens eines ersten Spannungswertes des Akkumulators (3) durch eine Spannungsmesseinrichtung (26); und
- Einstellen eines ersten Leistungsparameterwertes der Werkzeugmaschine (2) auf einen zweiten Leistungsparameterwert der Werkzeugmaschine (2) zum Einstellen eines Stromstärkenwerts, wenn der erfasste Temperaturwert einem vorbestimmten Temperaturschwellwert und der erfasste Spannungswert einem vorbestimmten Spannungsschwellwert entspricht.

2. Verfahren nach Anspruch 1
**gekennzeichnet durch** den Verfahrensschritt
- Speichern des eingestellten Stromstärkenwertes in einer Speichereinrichtung (28) des Akkumulators (3);
- Senden des Stromstärkenwertes von der Speichereinrichtung (28) des Akkumulators (3) an die Steuerungseinrichtung (9) der Werkzeugmaschine (2); und
- Einstellen des Stromstärkenwertes durch Einstellen wenigstens eines Leistungsparameterwertes der Werkzeugmaschine (2), wenn der Akkumulator (3) einen vorbestimmten Ladungswert übersteigt.

3. Verfahren nach Anspruch 1,
**dadurch gekennzeichnet, dass** der Leistungsparameter der Werkzeugmaschine (2) ein Drehzahlwert des Antriebs (8) oder ein Drehmomentwert des Antriebs (8) ist.

4. System (1) enthaltend eine Werkzeugmaschine (2) und wenigstens einen Akkumulator (3) zur Versorgung der Werkzeugmaschine (2) mit elektrischer Energie zur Durchführung des Verfahrens nach wenigstens einem der Ansprüche 1 bis 3.
